# EUROPÄISCHE PATENTSCHRIFT

(11) **EP 2 473 380 B1**
(45) Veröffentlichungstag und Bekanntmachung des Hinweises auf die Patenterteilung: **24.12.2014**
(21) Anmeldenummer: 10767949.0
(22) Anmeldetag: 31.08.2010
(51) Int. Cl.: B60R 21/201

(54) **GASSACKMODUL FÜR EIN FAHRZEUGINSASSEN-RÜCKHALTESYSTEM**
AIRBAG MODULE FOR A VEHICLE OCCUPANT RESTRAINT SYSTEM
MODULE COUSSIN DE SÉCURITÉ POUR UN SYSTÈME DE RETENUE D'UN PASSAGER DE VÉHICULE

(30) Priorität: 02.09.2009 DE 102009040246
(43) Veröffentlichungstag der Anmeldung: 11.07.2012
(73) Patentinhaber: Takata AG, 63743 Aschaffenburg (DE)
(72) Erfinder: HAMELS, Stefan, 73557 Nutlangen (DE); FECHNER, Tobias, 63743 Aschaffenburg (DE)
(74) Vertreter: Müller, Wolfram Hubertus
(86) Internationale Anmeldenummer: PCT/EP2010/062765
(87) Internationale Veröffentlichungsnummer: WO 2011/026849

(56) Entgegenhaltungen:
- WO-A1-2010/119082
- US-A1- 2007 138 769

## Beschreibung

Die Erfindung betrifft ein Gassackmodul für ein Fahrzeuginsassen-Rückhaltesystem gemäß dem Oberbegriff des Anspruchs 1 sowie ein Verfahren zum Herstellen eines Gassackmoduls.

Es ist bekannt, einen Gassack im gefalteten Zustand in Folie zu verpacken und innerhalb der Folie ein Vakuum zu erzeugen, um eine hohe Packungsdichte des Gassackes zu erreichen. Beispielsweise ist es bekannt, den Gassack in eine tiefgezogene Unterfolie zu falten und diese mit einer annähernd ebenen Oberfolie zu verschweißen. Dabei kann das Problem auftreten, dass beim Entfalten des Gassacks eine starke Dehnung der Unterfolie auftritt und diese reißt, bevor der Gassack durch die Oberfolie hindurch ausgetreten ist. Eine solche unerwünschte Dehnung der Unterfolie beruht auf dem Umstand, dass der Gassack sich allein im Bereich der Oberfolie aus dem Gassackmodul herausbewegen kann und dementsprechend gegen die Oberfolie drückt. Dies führt dazu, dass die Unterfolie auf Zug belastet und ebenfalls gedehnt wird. Das Reißen der Unterfolie kann dazu führen, dass in unerwünschter Weise Folienstücke undefiniert in den Fahrzeuginnenraum geschleudert werden. Dieses Problem kann ebenso bei Gassackpaketen auftreten, die nicht vakuumverpackt sind.

Im Fall eines Beifahrerairbags konkretisiert sich dieses Problem dahingehend, dass zwischen der Oberfolie des Gassackpakets und der angrenzenden Airbagklappe, die im Auslösefall aufklappt oder aufreißt und typischerweise durch die Instrumententafel oder eine separate Kappe gebildet ist, von den Fahrzeugherstellern ein Mindestabstand gefordert wird, der typischerweise etwa 15 mm beträgt. Um diesen Betrag muss die Gassackhülle sich ausdehnen können, ohne dass aufgrund der dabei auf die Unterfolie wirkenden Zugbelastung die Unterfolie reißt.

Dieses Problem tritt in verstärktem Maße im Tieftemperaturbereich ein, in dem die Dehnbarkeit von Folien stark eingeschränkt ist. Zwar existieren Folien, die auch im Tieftemperaturbereich stark dehnfähig sind. Solche Folien sind jedoch entweder teuer und/oder in nur beschränktem Ausmaße tiefziehbar, weswegen sie zur Lösung des genannten Problems nur bedingt geeignet sind.

Das Dokument US 2007/138769 A1 offenbart ein Gassackmodul für ein Fahrzeuginsassen-Rückhaltesystem gemäß dem Oberbegriff des Anspruchs 1.

Der vorliegenden Erfindung liegt die Aufgabe zugrunde, ein Gassackmodul mit einem Gassackpaket mit einer verbesserten Sicherheit in Bezug auf ein unerwünschtes Abreißen von Gassackverpackung wie z.B. Folie zur Verfügung zu stellen. Gleichzeitig soll ein Verfahren zur Herstellung eines entsprechenden Gassackmoduls bereitgestellt werden.

Diese Aufgabe wird durch ein Gassackmodul mit den Merkmalen des Anspruchs 1 sowie ein Verfahren mit den Merkmalen des Anspruchs 15 gelöst. Ausgestaltungen der Erfindung sind in den abhängigen Ansprüchen angegeben.

Danach ist gemäß einem Aspekt der vorliegenden Erfindung vorgesehen, dass der Hüllenflansch der Hülle eines Gassackpakets, der durch die Flanschabschnitte eines ersten, unteren Hüllteils und eines zweiten, oberen Hüllteils des Gassackpakets gebildet ist, am Modulgehäuse räumlich fixiert und/oder zwischen dem Modulgehäuse und einer angrenzenden Struktur, beispielsweise einer Instrumententafel, räumlich fixierbar ist. Das erste Hüllteil ist dabei beispielsweise durch eine Unterfolie und das zweite Hüllteil durch eine Oberfolie des Gassackpakets gebildet. Durch die räumliche Fixierung des Hüllenflansches wird eine Zugbelastung des ersten, unteren Hüllteils verhindert oder zumindest erheblich reduziert, da die entsprechenden Zugkräfte, die im Auslösefall durch Dehnung des zweiten, oberen Hüllteils entstehen, durch das Modulgehäuse und/oder die angrenzende Struktur aufgenommen werden. Damit erfährt das untere Hüllteil eine allenfalls geringe Dehnung.

Dies bedeutet gleichzeitig, dass die auftretenden Spannungen im Bereich des oberen Hüllteils konzentriert werden, das heißt im Wesentlichen die gesamte Dehnung wird von dem oberen Hüllteil übernommen, bis dieses schließlich definiert im Bereich einer Aufreißkante aufreißt. Die Gefahr des Versagens des unteren Hüllteils wird durch diese Reduktion der Spannungen erheblich reduziert.

Bei der beschriebenen Funktionalität ist weiter zu beachten, dass das Aufreißen des oberen Hüllteils entlang einer definierten Aufreißlinie durch die Summe aus vertikalen und horizontalen Spannungen hervorgerufen wird. Diese werden durch die Erfindung im Bereich der Aufreißlinie so verstärkt, dass die Aufreißlinie bereits bei einer geringen Dehnung des oberen Hüllteils, d. h. nach einem geringen vertikalen Weg in Richtung der Airbagklappe aufreißt.

Die erfindungsgemäße Lösung verhindert somit sicher eine Separation von Hüllenteilen bei der Gassackauslösung, wobei gleichzeitig ein definiertes Öffnen der Hülle im Bereich des oberen Hüllteils und ein definiertes Entfalten des Luftsacks aufgrund der definierten Öffnung der Hülle bereitgestellt werden. Gleichzeitig können auf Grund der Entlastung des unteren Hüllteils Vorgaben hinsichtlich eines Mindestabstandes zwischen dem Faltpaket und einer angrenzenden Airbagklappe problemlos erfüllt werden.

Der Hüllenflansch der Hülle des Gassackpakets wird durch die Verbindung eines Flanschabschnitts des ersten Hüllteils und eines Flanschabschnitts des zweiten Hüllteils gebildet. Die beiden Flanschabschnitte werden beispielsweise miteinander verschweißt oder verklebt. Ein Flanschabschnitt ist dabei insbesondere ein plan ausgebildeter Ansatz, der von dem übrigen Hüllteil abstehen kann. Dabei kann vorgesehen sein, dass ein Flanschabschnitt eine geschlossene, umlaufende Geometrie aufweist, womit auch der Hüllenflansch insgesamt eine solche Geometrie besitzt. In anderen Ausgestaltungen können auch nicht umlaufende, beispielsweise laschenartige Strukturen jeweils einen Flanschabschnitt und den Hüllenflansch bilden. Auch können mehrere, insbesondere voneinander beabstandete Flanschabschnitte des ersten und/oder des zweiten Hüllteils und aus diesem gebildete Hüllenflanschabschnitte vorgesehen sein.

In einer Ausgestaltung der Erfindung ist der Hüllenflansch in seitlich vom Gassackpaket abstehender Lage am Modulgehäuse räumlich fixiert oder zwischen dem Modulgehäuse und einer angrenzenden Struktur räumlich fixierbar. Der Hüllenflansch steht somit seitlich von dem übrigen Gassackpaket ab, so dass seine Fixierung erfolgen kann, ohne das eigentliche Gassackpaket zu tangieren. In diesem Zusammenhang kann vorgesehen sein, dass der Hüllenflansch im Bereich eines Flansches des Modulgehäuses räumlich fixiert oder fixierbar ist. Ein Flansch eines Modulgehäuses, mittels dessen das Modulgehäuse beispielsweise in einer Fahrzeugstruktur wie einer Instrumententafel befestigt wird, bietet eine breite Auflage zur Fixierung und Klemmung des Hüllenflansches. Eine solche Klemmung kann mit oder ohne gesonderte Fixiermittel erfolgen.

Der Hüllenflansch wird beispielsweise mittels separater oder modulintegrierter Fixierelemente am Modulgehäuse räumlich fixiert. Beispielsweise dienen Bolzen einer Modulverschraubung der räumlichen Fixierung des Hüllenflansches. In einer anderen Ausgestaltung sind am Modulgehäuse Haken ausgebildet, in die der Hüllenflansch eingehängt ist. Weiter kann vorgesehen sein, dass der Hüllenflansch durch Fixierelemente der angrenzenden Struktur, beispielsweise einer Instrumententafel, räumlich fixierbar ist, und/oder dass der Hüllenflansch durch Formschlusselemente, die der Verbindung des Modulgehäuses mit der angrenzenden Struktur dienen, räumlich fixierbar ist.

Zur räumlichen Fixierung des Hüllenflansches ist es in einem Ausführungsbeispiel vorgesehen, dass der Hüllenflansch vorgestanzte Löcher aufweist, die ein Durchführen von Fixierelementen, wie zum Beispiel Haken und Stiften, durch solche Löcher erlauben.

Das erste Hüllteil bildet in einer Ausgestaltung der Erfindung eine Aufnahme, in der der gefaltete Gassack angeordnet ist. Das zweite Hüllteil verschließt die durch das erste Hüllteil gebildete Aufnahme. Das erste und das zweite Hüllteil sind dabei beispielsweise durch eine Unterfolie und eine Oberfolie gebildet, die an dem jeweiligen Flanschabschnitt miteinander verschweißt sind. Insbesondere ist die Unterfolie dabei als tiefgezogene Unterfolie ausgebildet, in die der gefaltete Gassack eingelegt ist.

Die Erfindung betrifft auch ein Fahrzeug mit einem Gassackmodul gemäß Anspruch 1.

Das erfindungsgemäße Verfahren zum Herstellen eines Gassackmoduls weist die folgenden Schritte auf:
- Anordnen eines Gassacks in einem ersten Hüllteil;
- Verbinden mindestens eines Flanschabschnitts des ersten Hüllteils mit mindestens einem Flanschabschnitt eines zweiten Hüllteils zum Bilden einer Hülle, in der der Gassack angeordnet ist, wobei die beiden miteinander verbundenen Flanschabschnitte mindestens einen Hüllenflansch der Hülle bilden, und wobei die Hülle und der Gassack ein Gassackpaket bilden;
- Anordnen das Gassackpakets in einem Modulgehäuse; und
- Räumliches Fixieren des Hüllenflansches am Modulgehäuse und/oder zwischen dem Modulgehäuse und einer angrenzenden Struktur.

Dabei kann vorgesehen sein, dass die Hülle vor dem vollständigen Verbinden der Flanschabschnitte evakuiert. wird, so dass ein vakuumverpacktes Gassackpaket bereitgestellt wird, das dann im Modulgehäuse angeordnet wird.

Die Erfindung wird nachfolgend unter Bezugnahme auf die Figuren der Zeichnung anhand mehrerer Ausführungsbeispiele beispielhaft erläutert. Es zeigen:
- Fig. 1: eine Schnittdarstellung eines ersten Ausführungsbeispiels eines Gassackmoduls;
- Fig. 2: eine Schnittdarstellung eines zweiten Ausführungsbeispiels eines Gassackmoduls, und
- Fig. 3: eine Schnittdarstellung eines dritten Ausführungsbeispiels eines Gassackmoduls.

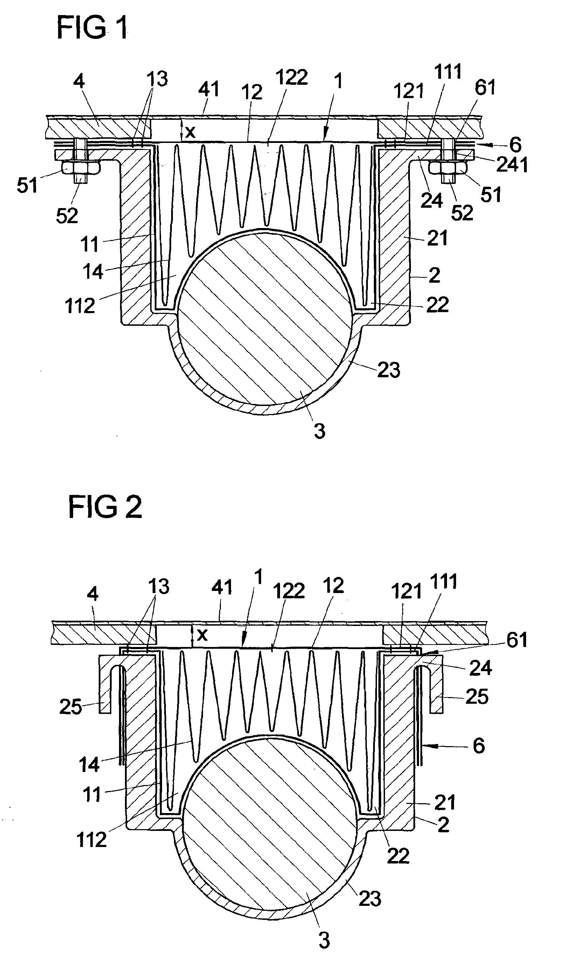

Die Figur 1 zeigt ein Gassackmodul, das ein Gassackpaket 1, ein Modulgehäuse 2 und einen Gasgenerator 3 aufweist. Das Gassackmodul ist über Befestigungselemente 51, 52 mit einer angrenzenden Struktur, beispielsweise einer Instrumententafel 4 eines Fahrzeuges verbunden.

Das Modulgehäuse 2 bildet mittels Seitenwänden 21 eine Aufnahme 22 zur Anordnung des Gassackpakets 1 aus. Die Aufnahme 2 umfasst des Weiteren einen Befestigungsbereich 23 für den Gasgenerator 3. Insofern stellt das dargestellte Gehäuse 2 gleichzeitig einen Gasgeneratorträger dar. Es kann jedoch ebenfalls vorgesehen sein, dass der Gasgeneratorträger als gesondertes Bauelement ausgebildet ist.

Der Gasgenerator ist in der Figur 1 lediglich beispielhaft dargestellt. Es kann grundsätzlich ein beliebiger Gasgenerator Verwendung finden, ggf. zusammen mit einem Diffusor (nicht dargestellt).

Das Modulgehäuse 2 bildet des Weiteren einen Flansch 24 aus, der der Befestigung des Gassackmoduls mit der Instrumententafel 4 dient. Der Flansch 24 weist Öffnungen 241 auf, die ein Durchführen von Verbindungselementen 52 ermöglichen. Bei den Verbindungselementen handelt es sich im dargestellten Ausführungsbeispiel um Bolzen 52, die mit der Instrumententafel 4 verbunden sind und zur Verbindung mit dem Modulgehäuse durch die Öffnungen 241 gesteckt und mittels Muttern 51 befestigt werden. Offensichtlich kann die Befestigung von Modulgehäuse 2 und Instrumententafel 4 jedoch auch in anderer Weise mittels geeigneter form- und/oder kraftschlüssiger Verbindungen erfolgen. Beispielsweise kann vorgesehen sein, dass die Bolzen 52 am Modulgehäuse 2 vormontiert oder in dieses integriert sind und in Öffnungen oder Aussparungen der Instrumententafel 4 gesteckt werden.

Das Gassackpaket 1 umfasst ein erstes Hüllteil 11 in Form einer tiefgezogenen Unterfolie sowie ein zweites Hüllteil 12 in Form einer Oberfolie 12, die über ein oder mehrere Schweißnähte 13 miteinander verbunden sind. Die tiefgezogene Unterfolie 11 bildet dabei eine Aufnahme 112, die der Anordnung des gefalteten Gassacks 14 dient. Die Aufnahme 112 wird durch die Oberfolie 12 verschlossen, die im Wesentlichen plan ausgebildet ist. Die Oberfolie 12 weist eine oder mehrere Aufreißlinien auf, entlang derer die Oberfolie bei Aufblasen des Gassacks 14 im Auslösefall definiert bei Erreichen einer bestimmten Dehnung reißt. Eine solche Aufreißlinie 122 ist in der Figur 1 schematisch dargestellt.

Zur Verbindung der Unterfolie 11 und der Oberfolie 12 sind Flanschabschnitte 111 der Unterfolie 11 und 121 der Oberfolie 12 vorgesehen, die plan aufeinander liegen und in deren Bereich die Schweißnähte 13 zur Verbindung der Unterfolie 11 und der Oberfolie 12 angeordnet sind. Die miteinander verbundenen Flanschabschnitte 112, 121 bilden einen Hüllenflansch 6 des Gassackpakets 1. Dieser steht von dem sonstigen Gassackpaket 1 ab.

Das Gassackpaket 1 ist in einer Ausgestaltung vakuumverpackt, d.h. innerhalb der Hülle 11, 12 wird ein Vakuum erzeugt, um eine hohe Packungsdichte des Gassackes 14 zu erreichen. In anderen Ausgestaltungen ist das Gassackpaket nicht vakuumverpackt.

Zur Fixierung des Hüllenflansches 6 weist dieser vorgestanzte Löcher 61 auf. Der Folienflansch 6 wird im Bereich der vorgestanzten Löcher 61 über die Bolzen 52 geschoben und beim Festziehen der Muttern 51 zwischen dem Flansch 24 des Modulsgehäuses 2 und der Instrumententafel 4 eingeklemmt.

Nach Verbindung des Modulgehäuses 2 mit der Instrumententafel 4 ist der Hüllenflansch 6 räumlich zwischen dem Modulgehäuse 2 und der Instrumententafel 4 fixiert. Dies führt dazu, dass im Auslösefall die gesamte Dehnung von der Oberfolie 12 übernommen wird, wobei die Unterfolie 11 keine oder nur in geringem Maße eine Dehnung erfolgt. Die Dehnung der Oberfolie 12 erfolgt solange, bis diese schließlich an einer oder mehrere Aufreißlinien 112 definiert aufreißt.

In diesem Zusammenhang wird darauf hingewiesen, dass die Instrumententafel 4 in einem Kappenbereich 41, der sich oberhalb des Gassackpakets 1 befindet, eine geringere Wandstärke aufweist und insofern von der Oberfolie 12 beabstandet ist. Dieser Abstand X ist in der Regel fahrzeugherstellerseitig festgelegt und kann ca. 15 mm betragen. Aufgrund der durch die räumliche Fixierung des Hüllenflansches 6 bereitgestellten Konzentration der auftretenden Spannungen an der Oberfolie 12 wird erreicht, dass die Oberfolie 12 reißt, bevor sie in Kontakt mit dem Kappenbereich 41 der Instrumententafel 4 tritt. Allerdings kann in anderen Ausführungsbeispielen auch vorgesehen sein, dass die Oberfolie 12 erst reißt, nachdem sie aus der Instrumententafel 4 herausgetreten ist. So kann es, da die auftretenden Spannungen ohnehin im Wesentlichen von der Oberfolie 12 aufgenommen werden, hinnehmbar sein, dass die Oberfolie erst zu einem späten Zeitpunkt aufreißt, nachdem diese die Kappe 41 durchbrochen hat.

Der durch die Wände 21 des Modulgehäuses 2 gebildete Aufnahme 21 kann beispielsweise quaderförmig oder zylindrisch ausgebildet sein, je nachdem, ob das Modulgehäuse 2 selbst im Querschnitt kreisförmig oder rechteckförmig ist. Dementsprechend kann der Hüllenflansch 6 als umlaufender Hüllenflansch ausgebildet sein oder aber mehrere, laschenartige Hüllenflanschbereiche aufweisen. In jedem Fall ist vorgesehen, dass die Unterfolie 11 an mindestens zwei Seiten, eventuell auch an drei oder vier Seiten oder umlaufend zwischen dem Modulgehäuse 2 und der Instrumententafel 4 geklemmt ist, so dass sie im Auslösefall keine oder eine nur geringe Dehnung erfährt.

Die Unterfolie 11 und die Oberfolie 12 können aus dem gleichen oder alternativ aus einem unterschiedlichen Material bestehen. Weiter wird darauf hingewiesen, dass der Gasgenerator 3 im dargestellten Ausführungsbeispiel nicht innerhalb der Hülle des Gassackpakets angeordnet ist, sondern an dieses angeflanscht ist. Das Einströmen von Gas aus dem Gasgenerator 3 in den Gassack 14 erfolgt dabei unter einer lokalen Zerstörung der Unterfolie 11 in den Gaseinströmbereichen. Es kann jedoch ebenso vorgesehen sein, dass der Gasgenerator 3 ebenfalls innerhalb des Gassackpakets 1 angeordnet ist.

Die Figur 2 zeigt eine Abwandlung des Ausführungsbeispiels der Figur 1, in dem die räumliche Fixierung des Hüllenflansches nicht zwischen dem Modulgehäuse 2 und der Instrumententafel 4 erfolgt, sondern allein am Modulgehäuse 2. Dies weist den Vorteil auf, dass die Fixierung und Klemmung im Zuge der Montage des Gassackmoduls erfolgen kann. Beim Ausführungsbeispiel der Figur 1 erfolgt die Klemmung des Hüllenflansches 6 erst bei der Montage des Gassackmoduls an der Instrumententafel 4.

Im Ausführungsbeispiel der Figur 2 weist das Modulgehäuse 2 mindestens zwei Haken 25 auf, in die der Hüllenflansch 6 über ausgestanzte Fenster 61 eingehängt wird. Hierzu ist beispielsweise gemäß der Figur 2 vorgesehen, dass der Flansch 24 an seiner dem Gassackpaket 1 abgewandten Außenseite nach unten umgebogene Haken 25 ausbildet. In diese sind dann die verschweißten Flanschabschnitte 111, 121 bzw. der durch diese gebildete Hüllenflansch 6 mittels vorgestanzter Löcher eingehängt. Im Übrigen entspricht das Ausführungsbeispiel der Figur 2 dem Ausführungsbeispiel der Figur 1.

Im Auslösefall und damit Öffnen des Gassackpakets 14 werden die miteinander verbundenen Folienflanschflächen 111, 121 durch die Haken 25 am Gehäuse gehalten. Eine Dehnung der Unterfolie 12 wird somit wiederum begrenzt.

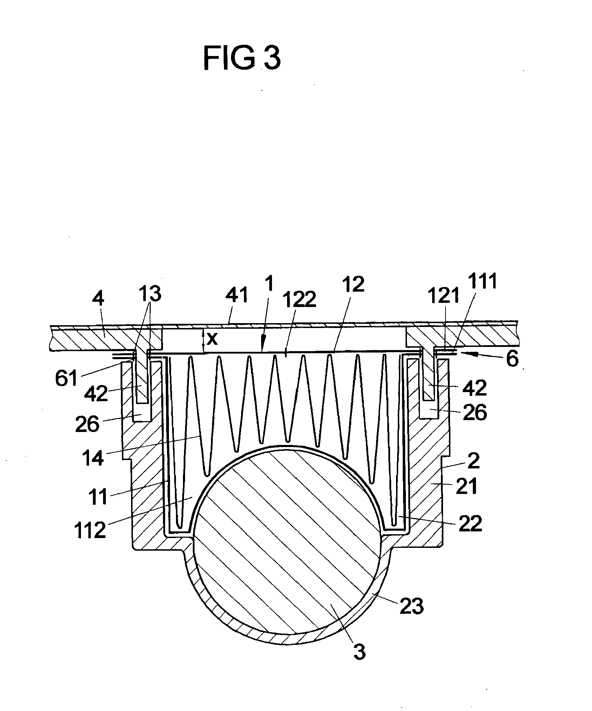

Im Ausführungsbeispiel der Figur 3 erfolgt eine Verbindung der Instrumententafel 4 mit dem Modulgehäuse 2 mittels nicht dargestellter Haken oder Verschraubungen. Es sind zur Folienbefestigung an der Instrumententafel 4 Fixierelemente 42 in Form von Pins und/oder Haken und/oder Leisten oder Stiften vorgesehen, die in der Figur 3 schematisch dargestellt sind und die in entsprechende Öffnungen 26 des Modulgehäuses 2 hineinragen. Die verschweißten Flanschflächen 111, 121 besitzen wiederum ausgestanzte Löcher 61. Beim Verbau des Gassackmoduls in der Instrumententafel 4 tauchen die Fixierelemente 42 der Instrumententafel 4 durch die Löcher 61 des Folienflansches 6 und fixieren diesen auf diese Weise räumlich. Im Übrigen entspricht das Ausführungsbeispiel der Figur 3 dem Ausführungsbeispiel der Figur 1.

Im Auslösefall und damit beim Öffnen des Gassackpakets werden die Folienflanschflächen 111, 121 und damit der Folienflansch 6 durch die Fixierelemente 42 in ihrer Lage fixiert, so dass wiederum eine Dehnung der Unterfolie 11 verhindert oder begrenzt wird.

Die Ausführungsbeispiele der Figuren 1 bis 3 können auch kombiniert werden. Beispielsweise können beim Ausführungsbeispiel der Figur 1 zusätzlich Haken zur Einhängung des Hüllenflansches 6 am Modulgehäuse 2 und/oder zusätzliche Fixierelemente gemäß der Figur 3 vorgesehen sein.

Die Herstellung des beschriebenen Gassackmoduls kann beispielsweise auf folgende Art und Weise erfolgen. Zunächst wird der gefaltete Gassack in der tiefgezogenen Unterfolie 11 angeordnet. Anschließend wird der Flanschabschnitt 121 der Oberfolie auf den Flanschabschnitt 111 der Unterfolie 11 gelegt und/oder auf diesem vorfixiert, wobei eine Hülle gebildet wird. Anschließend wird die Hülle evakuiert. Nun werden der Flanschabschnitt 111 der Unterfolie 11 und der Flanschabschnitt 121 der Oberfolie miteinander verschweißt, so dass die Hülle und der Gassack ein vakuumverpacktes Gassackpaket bilden. Dabei kann vorgesehen sein, dass vor der Evakuierung der Hülle die beiden Flanschabschnitte 121, 111 bereits teilweise verschweißt werden, wobei ein vollständiges Verschweißen erst nach dem Evakuieren erfolgt. In anderen Ausführungsvarianten wird von einer Evakuierung der Hülle abgesehen.

Das Gassackpaket wird dann in dem Modulgehäuse 12 angeordnet. Anschließend erfolgt ein räumliches Fixieren des Hüllenflansches 6 am Modulgehäuse 2 und/oder zwischen dem Modulgehäuse und einer angrenzenden Struktur, wie beispielhaft anhand der Figuren 1 bis 3 dargestellt.

Die Erfindung beschränkt sich in ihrer Ausgestaltung nicht auf die dargestellten Ausführungsbeispiele, die lediglich beispielhaft zu verstehen sind. Beispielsweise können die dargestellten Fixierungen des Hüllenflansches am Modulgehäuse oder zwischen dem Modulgehäuse und der Instrumententafel miteinander kombiniert werden. Weiter kann das beschriebene Gassackmodul statt mit einer Instrumententafel auch mit einer anderen angrenzenden Fahrzeugstruktur verbunden sein. Die Prinzipien der vorliegenden Erfindungen sind insofern auf andere Arten von Airbagmodulen als Beifahrerairbagmodule übertragbar. Weiter sind das Modulgehäuse, die Arten der räumlichen Fixierung des Hüllenflansches am Modulgehäuse oder zwischen dem Modulgehäuse und der angrenzenden Struktur sowie das dargestellte Gassackpaket lediglich beispielhaft zu verstehen. Dies gilt auch für die lediglich schematisch angedeutete Art der Faltung des Gassacks im Gassackpaket.

## Patentansprüche

1. Gassackmodul für ein Fahrzeuginsassen-Rückhaltesystem, mit
- einem Gassackpaket (1), das einen zum Schutz eines Fahrzeuginsassen aufblasbaren Gassack (14) sowie eine Hülle (11, 12), in der der Gassack (14) angeordnet ist, aufweist, und
- einem Modulgehäuse (2), in dem das Gassackpaket (1) angeordnet ist, wobei
- die Hülle (11, 12) des Gassackpakets (1) ein erstes, unteres Hüllteil (11) und ein zweites, oberes Hüllteil (12) umfasst, und
- das erste Hüllteil (11) und das zweite Hüllteil (12) jeweils mindestens einen Flanschabschnitt (111, 121) aufweisen, die unter Ausbildung mindestens eines von dem übrigen Gassackpaket (1) abstehenden Hüllenflansches (6) miteinander verbunden sind,
**dadurch gekennzeichnet,**
**dass** der Hüllenflansch (6) am Modulgehäuse (2) räumlich fixiert und/oder zwischen dem Modulgehäuse (2) und einer angrenzenden Struktur (4) räumlich fixierbar ist.

2. Gassackmodul nach Anspruch 1, **dadurch gekennzeichnet, dass** der Hüllenflansch (6) in seitlich vom Gassackpaket (1) abstehender Lage am Modulgehäuse (2) räumlich fixiert und/oder zwischen dem Modulgehäuse (2) und einer angrenzenden Struktur (4) räumlich fixierbar ist.

3. Gassackmodul nach Anspruch 1 oder 2, **dadurch gekennzeichnet, dass** der Hüllenflansch (6) im Bereich eines Flansches (24) des Modulgehäuses (2) räumlich fixiert oder fixierbar ist.

4. Gassackmodul nach einem der vorangehenden Ansprüche, **dadurch gekennzeichnet, dass** der Hüllenflansch (6) mittels separater oder modulintegrierter Fixierelemente (25) am Modulgehäuse (2) räumlich fixiert ist.

5. Gassackmodul nach Anspruch 4, **dadurch gekennzeichnet, dass** das Modulgehäuse (2) an seiner dem Gassackpaket (1) abgewandten Außenseite Haken (25) ausbildet, in die der Hüllenflansch (6) eingehängt ist.

6. Gassackmodul nach einem der vorangehenden Ansprüche, **dadurch gekennzeichnet, dass** der Hüllenflansch (6) durch Fixierelemente (52) der angrenzenden Struktur (4) räumlich fixierbar ist.

7. Gassackmodul nach einem der vorangehenden Ansprüche, **dadurch gekennzeichnet, dass** der Hüllenflansch (6) durch Formschlusselemente (26, 42), die der Verbindung des Modulgehäuses (2) mit der angrenzenden Struktur (4) dienen, räumlich fixierbar ist.

8. Gassackmodul nach einem der vorangehenden Ansprüche, **dadurch gekennzeichnet, dass** der Hüllenflansch (6) zur Fixierung mehrere vorgestanzte Löcher (61) aufweist, die ein Durchführen von Fixierelementen (52) erlauben.

9. Gassackmodul nach einem der vorangehenden Ansprüche, **dadurch gekennzeichnet, dass** der Hüllenflansch (6) zwischen dem Modulgehäuse (2) und einer angrenzenden Struktur (4) mittels Klemmung, ohne zusätzliche Fixiermittel, fixierbar ist.

10. Gassackmodul nach einem der vorangehenden Ansprüche, **dadurch gekennzeichnet**, das Gassackmodul ein Beifahrergassackmodul ist und die angrenzende Struktur (4), die zusammen mit dem Modulgehäuse (2) der räumlichen Fixierung des Hüllenflansches (6) dient, durch eine Instrumententafel gebildet ist.

11. Gassackmodul nach einem der vorangehenden Ansprüche, **dadurch gekennzeichnet, dass** das zweite Hüllteil (15) mindestens eine Aufreißkante (122) aufreist, entlang derer das zweite Hüllteil (15) im Auslösefall aufreißt.

12. Gassackmodul nach einem der vorangehenden Ansprüche, **dadurch gekennzeichnet, dass** das erste Hüllteil (11) eine Aufnahme (112) bildet, in der der gefaltetete Gassack (14) angeordnet ist, und das zweite Hüllteil (12) die durch das erste Hüllteil (11) gebildete Aufnahme (112) verschließt.

13. Gassackmodul nach einem der vorangehenden Ansprüche, **dadurch gekennzeichnet, dass** das erste Hüllteil (11) und das zweite Hüllteil (12) durch eine Unterfolie und eine Oberfolie gebildet sind, die an den jeweiligen Flanschabschnitten (111, 121) miteinander verschweißt sind.

14. Gassackmodul nach einem der vorangehenden Ansprüche, **dadurch gekennzeichnet, dass** der Gassack (14) in der Hülle (11, 12) vakuumverpackt ist.

15. Verfahren zum Herstellen eines Gassackmoduls für ein Fahrzeuginsassen-Rückhaltesystem mit den Schritten:
- Anordnen eines Gassacks (14) in einem ersten Hüllteil (11);
- Verbinden mindestens eines Flanschabschnitts (111) des ersten Hüllteils (11) mit mindestens einem Flanschabschnitt (121) eines zweiten Hüllteils (12) zum Bilden einer Hülle, in der der Gassack (14) angeordnet ist, wobei die beiden miteinander verbundenen Flanschabschnitte (111, 121) mindestens einen Hüllenflansch (6) der Hülle bilden, und wobei die Hülle (11, 12) und der Gassack (14) ein Gassackpaket (1) bilden;
- Anordnen des Gassackpakets (1) in einem Modulgehäuse (2); und
- Räumliches Fixieren des Hüllenflansches (6) am Modulgehäuse (2) und/oder zwischen dem Modulgehäuse (2) und einer angrenzenden Struktur (4).

## Claims

1. Air bag module for a vehicle occupant restraint system, having
- an air bag package (1), having an air bag (14) which is inflatable for the protection of a vehicle occupant as well as an envelope (11, 12), in which the air bag (14) is arranged, and
- a module casing (2), in which the air bag package (1) is arranged, wherein
- the envelope (11, 12) of the air bag package (1) comprises a first, lower envelope part (11) and a second, upper envelope part (12), and
- the first envelope part (11) and the second envelope part (12) have at least one flange section (111, 121) each, which are connected to each other so that at least one envelope flange (6) protruding from the remaining air bag package (1) is formed,
**characterized**
**in that** the envelope flange (6) is spatially fixed on the module casing (2) and/or can be spatially fixed between the module casing (2) and an adjacent structure (4).

2. Air bag module according to Claim 1, **characterized in that** the envelope flange (6) in a position laterally protruding from the air bag package (1) is spatially fixed on the module casing (2) and/or can be spatially fixed between the module casing (2) and an adjacent structure (4).

3. Air bag module according to Claim 1 or 2, **characterized in that** the envelope flange (6) in the area of a flange (24) of the module casing (2) is or can be spatially fixed.

4. Air bag module according to any of the preceding claims, **characterized in that** the envelope flange (6) is spatially fixed by means of separate or module-integrated fixing elements (25) on the module casing (2).

5. Air bag module according to Claim 4, **characterized in that** the module casing (2) forms hooks (25) on its outer side turned away from the air bag package (1), into which hooks (25) the envelope flange (6) is hung.

6. Air bag module according to any of the preceding claims, **characterized in that** the envelope flange (6) can be spatially fixed by fixing elements (52) of the adjacent structure (4).

7. Air bag module according to any of the preceding claims, **characterized in that** the envelope flange (6) can be spatially fixed by positive-locking elements (26, 42), which serve to connect the module casing (2) to the adjacent structure (4).

8. Air bag module according to any of the preceding claims, **characterized in that** the envelope flange (6) has multiple pre-punched holes (61) for fixing, which allow for a passing through of fixing elements (52).

9. Air bag module according to any of the preceding claims, **characterized in that** the envelope flange (6) can be fixed between the module casing (2) and an adjacent structure (4) by means of clamping, without additional fixing means.

10. Air bag module according to any of the preceding claims, **characterized in that** the air bag module is a passenger air bag module and the adjacent structure (4), which together with the module casing (2) serves for the spatial fixing of the envelope flange (6), is formed by an instrument panel.

11. Air bag module according to any of the preceding claims, **characterized in that** the second envelope part (15) has at least one tearing edge (122), along which the second envelope part (15) tears open in the event of deployment.

12. Air bag module according to any of the preceding claims, **characterized in that** the first envelope part (11) forms a housing (112), in which the folded air bag (14) is arranged, and the second envelope part (12) closes the housing (112) formed by the first envelope part (11).

13. Air bag module according to any of the preceding claims, **characterized in that** the first envelope part (11) and the second envelope part (12) are formed by a bottom foil and a top foil, which are welded together on the respective flange sections (111, 121).

14. Air bag module according to any of the preceding claims, **characterized in that** the air bag (14) is vacuum-packed in the envelope (11, 12).

15. Method for producing an air bag module for a vehicle occupant restraint system with the steps:
- Arranging an air bag (14) in a first envelope part (11);
- Connecting at least one flange section (111) of the first envelope part (11) with at least one flange section (121) of a second envelope part (12) to form an envelope, in which the air bag (14) is arranged, wherein the two flange sections (111, 121), which are connected to each other, form at least one envelope flange (6) of the envelope, and wherein the envelope (11, 12) and the air bag (14) form an air bag package (1);
- Arranging the air bag package (1) in a module casing (2); and
- Spatially fixing the envelope flange (6) on the module casing (2) and/or between the module casing (2) and an adjacent structure (4).

## Revendications

1. Module de sac à gaz pour un système de retenue d'occupant de véhicule avec
- un paquet de sac à gaz (1) qui présente un sac à gaz (14) gonflable pour la protection d'un occupant de véhicule ainsi qu'une enveloppe (11, 12), dans laquelle le sac à gaz (14) est agencé, et
- un boîtier de module (2), dans lequel le paquet de sac à gaz (1) est agencé, dans lequel
- l'enveloppe (11, 12) du paquet de sac à gaz (1) comporte une première partie d'enveloppe inférieure (11) et une seconde partie d'enveloppe supérieure (12), et
- la première partie d'enveloppe (11) et la seconde partie d'enveloppe (12) présentent respectivement au moins une section de bride (111, 121) qui sont reliées entre elles en réalisant au moins une bride d'enveloppe (6) dépassant du paquet de sac à gaz (1) restant,
**caractérisé en ce que**
la bride d'enveloppe (6) est fixée dans l'espace sur le boîtier de module (2) et/ou peut être fixée dans l'espace entre le boîtier de module (2) et une structure contiguë (4).

2. Module de sac à gaz selon la revendication 1, **caractérisé en ce que** la bride d'enveloppe (6) est fixée dans l'espace dans une position dépassant latéralement du paquet de sac à gaz (1) sur le boîtier de module (2) et/ou peut être fixée dans l'espace entre le boîtier de module (2) et une structure contiguë (4).

3. Module de sac à gaz selon la revendication 1 ou 2, **caractérisé en ce que** la bride d'enveloppe (6) est ou peut être fixée dans l'espace dans la zone d'une bride (24) du boîtier de module (2).

4. Module de sac à gaz selon l'une quelconque des revendications précédentes, **caractérisé en ce que** la bride d'enveloppe (6) est fixée dans l'espace à l'aide d'éléments de fixation (25) séparés ou intégrés au module sur le boîtier de module (2).

5. Module de sac à gaz selon la revendication 4, **caractérisé en ce que** le boîtier de module (2) réalise, sur son côté extérieur éloigné du paquet de sac à gaz (1), des crochets (25), dans lesquels la bride d'enveloppe (6) est accrochée.

6. Module de sac à gaz selon l'une quelconque des revendications précédentes, **caractérisé en ce que** la bride d'enveloppe (6) peut être fixée dans l'espace par des éléments de fixation (52) de la structure contiguë (4).

7. Module de sac à gaz selon l'une quelconque des revendications précédentes, **caractérisé en ce que** la bride d'enveloppe (6) peut être fixée dans l'espace par des éléments à complémentarité de formes (26, 42) qui servent à la liaison du boîtier de module (2) avec la structure contiguë (4).

8. Module de sac à gaz selon l'une quelconque des revendications précédentes, **caractérisé en ce que** la bride d'enveloppe (6) présente pour la fixation plusieurs trous préestampés (61) qui permettent un passage d'éléments de fixation (52).

9. Module de sac à gaz selon l'une quelconque des revendications précédentes, **caractérisé en ce que** la bride d'enveloppe (6) peut être fixée entre le boîtier de module (2) et une structure contiguë (4) par serrage sans moyen de fixation supplémentaire.

10. Module de sac à gaz selon l'une quelconque des revendications précédentes, **caractérisé en ce que** le module de sac à gaz est un module de sac à gaz de passager et la structure contiguë (4) qui sert conjointement avec le boîtier de module (2) à la fixation dans l'espace de la bride d'enveloppe (6), est formée par un tableau de bord.

11. Module de sac à gaz selon l'une quelconque des revendications précédentes, **caractérisé en ce que** la seconde partie d'enveloppe (15) présente au moins une arête de rupture (122), le long de laquelle la seconde partie d'enveloppe (15) rompt en cas de déclenchement.

12. Module de sac à gaz selon l'une quelconque des revendications précédentes, **caractérisé en ce que** la première partie d'enveloppe (11) forme un logement (112), dans lequel le sac à gaz (14) plié est agencé, et la seconde partie d'enveloppe (12) ferme le logement (112) formé par la première partie d'enveloppe (11).

13. Module de sac à gaz selon l'une quelconque des revendications précédentes, **caractérisé en ce que** la première partie d'enveloppe (11) et la seconde partie d'enveloppe (12) sont formées par un film inférieur et un film supérieur qui sont soudés entre eux sur les sections de bride (111, 121) respectives.

14. Module de sac à gaz selon l'une quelconque des revendications précédentes, **caractérisé en ce que** le sac à gaz (14) est emballé sous vide dans l'enveloppe (11, 12).

15. Procédé de fabrication d'un module de sac à gaz pour un système de retenue d'occupant de véhicule avec les étapes suivantes :
- agencement d'un sac à gaz (14) dans une première partie d'enveloppe (11) ;
- liaison au moins d'une section de bride (111) de la première partie d'enveloppe (11) avec au moins une section de bride (121) d'une seconde partie d'enveloppe (12) pour former une enveloppe, dans laquelle le sac à gaz (14) est agencé, les deux sections de bride (111, 121) reliées entre elles formant au moins une bride d'enveloppe (6) de l'enveloppe et l'enveloppe (11, 12) et le sac à gaz (14) formant un paquet de sac à gaz (1) ;
- agencement du paquet de sac à gaz (1) dans un boîtier de module (2) ; et
- fixation dans l'espace de la bride d'enveloppe (6) sur le boîtier de module (2) et/ou entre le boîtier de module (2) et une structure contiguë (4).
